(19) Europäisches Patentamt / European Patent Office / Office européen des brevets

(11) **EP 1 247 264 B1**

(12) **EUROPÄISCHE PATENTSCHRIFT**

(45) Veröffentlichungstag und Bekanntmachung des Hinweises auf die Patenterteilung:
**10.10.2007 Patentblatt 2007/41**

(51) Int Cl.:
*G07F 7/12* (2006.01)  *G06K 19/067* (2006.01)

(21) Anmeldenummer: **00990560.5**

(22) Anmeldetag: **20.12.2000**

(86) Internationale Anmeldenummer:
**PCT/DE2000/004563**

(87) Internationale Veröffentlichungsnummer:
**WO 2001/052207 (19.07.2001 Gazette 2001/29)**

(54) **HALBLEITERCHIP MIT EINDEUTIGER IDENTITÄT UND VERFAHREN ZUR FESTLEGUNG DER EINDEUTIGEN IDENTITÄT EINES HALBLEITERCHIPS**

SEMICONDUCTOR CHIP WITH AN UNEQUIVOCAL IDENTITY AND METHOD FOR ESTABLISHING THE UNEQUIVOCAL IDENTITY OF A SEMICONDUCTOR CHIP

MICROPLAQUETTE SEMI-CONDUCTRICE D'IDENTITE UNIVOQUE ET PROCEDE DE DETERMINATION DE L'IDENTITE UNIVOQUE D'UNE MICROPLAQUETTE SEMI-CONDUCTRICE

(84) Benannte Vertragsstaaten:
**AT DE FR GB IT**

(30) Priorität: **11.01.2000 EP 00100509**

(43) Veröffentlichungstag der Anmeldung:
**09.10.2002 Patentblatt 2002/41**

(73) Patentinhaber: **Infineon Technologies AG**
**81669 München (DE)**

(72) Erfinder:
• **WEBER, Thomas**
**81679 München (DE)**
• **HESENER, Alfred**
**80339 München (DE)**

(74) Vertreter: **Epping - Hermann - Fischer**
**Ridlerstrasse 55**
**80339 München (DE)**

(56) Entgegenhaltungen:
**EP-A- 0 313 967  EP-A- 0 583 709**
**EP-A- 0 602 643  WO-A-97/11442**
**DE-A- 4 243 888  FR-A- 2 471 083**
**US-A- 5 301 143**

**Beschreibung**

Die Erfindung betrifft einen Halbleiterchip mit eindeutiger Identität und ein Verfahren zur Festlegung seiner eindeutigen Identität, der Speicher- und/oder Logikeinrichtungen aufweist.

Es ist seit längerem bekannt, die Echtheitsprüfung von Datenträgern, Wertzeichen oder ähnlichen geldwerten Produkten anhand einer für jedes Wertzeichen charakteristischen, individuellen und maschinell feststellbaren Eigenschaft vorzunehmen.

Man erreicht dabei einen hohen Sicherheitsstandard, wenn es sich bei der individuellen Eigenschaft oder Kenngröße um ein nur mit sehr hohem technischem Aufwand nachahmbares und für jedes Wertzeichen charakteristisches Merkmal handelt. Eine solche individuelle Eigenschaft kann beispielsweise eine bei der Herstellung aufgrund von Fabrikationsstreuungen mehr oder weniger zufällig entstehende Grösse sein.

In diesem Zusammenhang wird in der EP 0 313 967 A1 ein Verfahren zur Echtheitsprüfung eines Datenträgers mit integriertem Schaltkreis vorgeschlagen, bei dem der Schaltkreis nicht nur nach seinem Typ, Layout etc. klassifiziert werden kann, um sich gegen Simulationsschaltungen zu schützen, sondern auf dem Schaltkreis selbst individuelle Grössen bestimmt werden können, die überwiegend aus Fabrikationsstreuungen bei der Herstellung des Schaltkreises resultieren und jeden einzelnen Schaltkreis individuell kennzeichnen. Als individuelle Grösse des Schaltkreises, mit der die Echtheit des Schaltkreises belegt werden kann, wird zum Beispiel die in einem E$^2$PROM-Speicher benötigte unterschiedliche minimale Programmierzeit für einzelne Speicherzellen herangezogen.

Das wesentliche einer Speicherzelle eines E$^2$PROM-Speichers besteht darin, dass sie eine durch eine dünne Isolierschicht gegenüber der Umgebung elektrisch getrennte Ladungszone aufweist, auf die durch die Isolierschicht hindurch unter Nutzung des sog. Tunneleffekts elektrische Ladungen aufgebracht, dort gespeichert und wieder entfernt werden können.

Die Isolierschichten der einzelnen Speicherzellen eines integrierten Schaltkreises variieren, unter anderem bedingt durch Fertigungstoleranzen bei der Herstellung in der Dicke der einzelnen Schichten sowie der Güte bzw. Reinheit des Materials, der Homogenität und Menge der Dotierung des Halbleitermaterials etc. vom Zufall abhängig innerhalb einer bestimmten Streubreite. Da bereits geringe Änderungen in diesen Parametern die Stärke des Tunnelstroms merklich beeinflussen, ergibt sich eine bestimmte Streubreite in den Zeiten, die notwendig sind, um eine Speicherzelle vom programmierten in den gelöschten Zustand zu schalten und umgekehrt.

Wird nur ein Speicherwort, das aus mehreren Speicherzellen (z.B. acht) besteht, während des Programmiervorgangs beobachtet, so weist jedes Speicherwort sein eigenes Schaltmuster auf. Dieses stellt sich für jedes einzelne Speicherwort charakteristische Schaltmuster bei jedem Programmiervorgang immer wieder in gleicher Form ein. Das "Schaltmuster" ist somit nicht nur ein gut streuendes, d.h. ein von Speicherwort zu Speicherwort und selbstverständlich auch von Schaltkreis zu Schaltkreis zufällig variierendes, sondern auch ein mit einfachen messtechnischen Mitteln exakt reproduzierbares, individuelles Merkmal dieses Schaltkreises.

Ein prinzipieller Nachteil dieses Verfahrens besteht darin, dass zur Feststellung der Echtheit der integrierte Schaltkreis einen E$^2$PROM-Speicher aufweisen muß. Das Verfahren lässt sich folglich nicht für integrierte Schaltkreise verwenden, die ausschließlich Logikelemente enthält.

Eine bei Logik-Schaltkreisen bekannte Möglichkeit zur eindeutigen Identifikation besteht darin, durch ein nachträgliches Bearbeiten des Halbleiterchips sog. Fuses vorzusehen. Das Herstellen der Fuses verursacht jedoch zusätzliche Kosten, da ein weiterer Bearbeitungsschritt nach dem Herstellen der Schaltungsstruktur notwendig ist. Dieses Vorgehen ist zudem nicht manipulationssicher, da zunächst identische Chips hergestellt werden müssen, die noch kein eindeutiges Unterscheidungsmerkmal aufweisen. Ein existierender Halbleiterchip könnte somit vor dem Herstellen der Fuses kopiert und manipuliert werden.

Aus dem Dokument WO 97/11442 ist eine integrierte Schaltung bekannt, die eine Speichereinrichtung aufweist, auf der sich eine Mehrzahl an Kontakten befindet. Die Speichereinrichtung und die Kontakte sind bedeckt mit einer Schicht, deren elektrische Widerstandsfähigkeit zufallsbedingt ist. Die integrierte Schaltung wird charakterisiert durch die ebenfalls zufallsbedingte Verteilung der Widerstände zwischen den Kontakten.

Aus dem Dokument FR-A-2471083 ist eine Schaltungsanordnung bekannt, die mehrere Transistoren aufweist. Die Transistoren sind entweder als aktive Transistoren, Unterbrechertransistoren oder Kurzschlußtransistoren ausgebildet, um die Funktion der Schaltungsanordnung für einen Beobachter zu verschleiern. Die Ausbildung der Transistoren erfolgt in Abhängigkeit der gewählten Dotierungskonzentration im Transistorkörper.

Die Aufgabe der vorliegenden Erfindung besteht nunmehr darin, einen Halbleiterchip vorzusehen, der nach dem Herstellen ein eindeutiges, charakterisierendes Merkmal aufweist, wobei keinerlei Einschränkung bezüglich der Art des Halbleiterchips gegeben sein soll. Diese Aufgabe wird mittels eines Halbleiterchips gemäß Anspruch 1 und eines Verfahrens gemäß Anspruch 13 gelöst.

Die Erfindung sieht folglich einen Halbleiterchip vor, der Speicher- und/oder Logikeinrichtungen aufweisen kann, wobei eine Mehrzahl an ersten Halbleiterschaltern vorgesehen ist, von denen jeder eine individuelle zufallsbedingte Eigenschaft besitzt, und wobei diese Eigenschaften in ihrer Summe den Halbleiterchip eindeutig charakterisieren.

Die zufallsbedingte Eigenschaft eines jeden ersten Halbleiterschalters wird dabei einer Ziffer zugeordnet, wobei durch eine entsprechende Anzahl an ersten Halbleiterschaltern eine eindeutige Ziffernfolge entsteht.

Vorteilhafte Weiterbildungen der Erfindung ergeben sich aus den Unteransprüchen.

In einer Weiterbildung der Erfindung werden die Eigenschaften der ersten Halbleiterschalter ausgewertet, die aufgrund verfahrenstechnischer Toleranzen bei der Herstellung variieren. Da die ersten Halbleiterschalter in den erfindungsgemässen Halbleiterchip integriert sind und die Eigenschaften der ersten Halbleiterschalter somit nicht mehr veränderbar sind, kann die aus den Eigenschaften der ersten Halbleiterschalter entstehende charakteristische Kennzeichnung nicht mehr verändert werden. Das Reproduzieren mit genau den gleichen Eigenschaften eines Halbleiterchips ist somit nur noch schwer möglich, da die verfahrenstechnischen Toleranzen bei der Herstellung der ersten Halbleiterchips praktisch nicht identisch reproduzierbar sind.

Gegenüber den aus dem Stand der Technik bekannten Methoden zur eindeutigen Identifizierung eines Halbleiterchips benötigt die Erfindung keine zusätzlichen Fertigungsschritte. Die ersten Halbleiterschalter werden vorteilhafterweise während der gängigen Herstellungsschritte des Halbleiterchips gefertigt.

Die Anzahl der Halbleiterschalter hängt von der Anzahl der Stellen der Ziffernfolge ab, die erwünscht ist. Mit einer Anzahl von 10 ersten Halbleiterschaltern ist es somit bereits möglich, neun Milliarden unterschiedliche Ziffernkombinationen zu erzeugen. Soll die Anzahl der unterschiedlichen Kombinationen höher sein, so sind entsprechend weitere erste Halbleiterschalter in dem Halbleiterchip vorzusehen. In jedem Fall wird jedoch zur Erlangung der eindeutigen Identität ein nur geringer Platz auf dem Halbleiterchip beansprucht.

Die ersten Halbleiterschalter werden in einer vorteilhaften Ausgestaltung der Erfindung nicht für die Funktion der Speicher- und/oder Logikeinrichtungen verwendet. Dies bedeutet nichts anderes, als dass die ersten Halbleiterschalter in einem von dem funktionellen Teil des Halbleiterchips getrennten Bereich untergebracht werden können. Es ist somit auch unerheblich, ob der Halbleiterchip als Speicherchip, als Logikchip oder als kombinierter Speicher-/Logikchip verwendet wird.

Hierdurch bedingt ergeben sich vielfältige neue Anwendungsmöglichkeiten. Auf einfachste Weise ist es nunmehr möglich, die Logistik und die Qualität der produzierten Halbleiterchips zu optimieren. Die Identität eines jeden Halbleiterchips kann ab der Beendigung der Scheibenfertigung registriert werden. Die Herkunft eines jeden Halbleiterchips ist somit rekonstruierbar. Über die gesamte Lebensdauer des Halbleiterchips können beispielsweise bei auftretenden Fehlern Rückschlüsse über die Qualität einzelner Wafer oder Chargen gezogen werden.

Die Chipidentität (dies ist die durch die ersten Halbleiterschalter bestimmte Ziffernfolge) kann in der Scheibenmessung und dann in der Endprüfung durch ein Prüfprogramm abgefragt und registriert werden. Die Chipidentitäten können in einer Datenbank gespeichert werden. Hierdurch können evtl. doppelt auftretende Nummern gegebenenfalls aussortiert werden. Das Abspeichern von Prüfprotokollen sowie von fertigungsrelevanten Informationen, wie z.B. die Losnummer, eine Fertigungslinie, das Datum der Fertigung, usw. können als Attribute zusätzlich in einer Datenbank abgelegt werden.

Insbesondere bei Produkten, die neu gefertigt werden, ist eine genaue Fehlerverfolgung möglich. Durch die einem jeden Halbleiterchip genau zuordenbare Produkt- und Fertigungsdaten kann ein höherer Qualitätsstandard erzielt werden, da beispielsweise bei später entdeckten Fehlern Kunden informiert werden können.

Neben erheblichen Vorteilen beim Erreichen eines hohen Qualitätsstandards kann auch die Logistik vereinfacht werden. Da ein erfindungsgemässer Halbleiterchip bereits eindeutig identifizierbar ist, braucht dieser nicht mehr mit einem Datencode versehen werden.

In einer vorteilhaften Ausgestaltung sind die ersten Halbleiterschalter als MOSFETs ausgeführt, die zu ersten MOS-Dioden verschaltet sind. Das erfindungsgemässe Vorgehen beruht auf dem Prinzip, dass MOS-Transistoren statistischen Schwankungen in ihrem Verhalten unterliegen. Diese Schwankungen sind um so grösser, je kleiner der Transistor ist. Sie beruhen darauf, dass die Eigenschaften durch einen Dotierungsprozess beeinflusst werden, der statistischen Gesetzen unterliegt. Dies bedeutet nichts anderes, als dass jeder Transistor eine andere Anzahl an Dotierstoffatomen aufweist. Diese Zahl ist weder manipulierbar noch verändert sie sich im Betrieb.

In einer vorteilhaften Weiterbildung der Erfindung werden die ersten MOS-Dioden jeweils mit einem vorgegebenen Strom beaufschlagt und die sich jeweils ergebende Spannung wird als den Halbleiterschalter kennzeichnendes Merkmal einer Auswertung zugeführt. Durch die Integration mehrerer Transistoren und die Messung ihrer Eigenschaften kann so eine fixe Zufallszahl gewonnen werden, die dann als Identifikationsnummer für den Halbleiterchip dient.

In einer Ausgestaltung der Erfindung weist die Auswertung eine der Anzahl der ersten Halbleiterschalter entsprechende Anzahl an Analog-/Digital-Wandlern auf. Durch das Auslesen der Ausgänge der Analogwandler in einer vorgegebenen Reihenfolge entsteht eine den Halbleiterchip charakterisierende Ziffernfolge.

Alternativ weist die Auswertung einen Multiplexer auf, dessen Eingänge mit jeweils einem der ersten Halbleiterschalter verbunden sind. Der Ausgang des Multiplexers ist dann mit einem Analog-/Digital-Wandler verbunden, an dem ausgangsseitig eine den Halbleiterchip charakterisierende Ziffernkombination auslesbar ist. Über den Multiplexer ist es nunmehr auf einfache Weise möglich, einen entsprechenden ersten Halbleiterschalter auszuwählen und somit durch die Reihenfolge die Stelle der Ziffernfolge vorzugeben.

In einer vorteilhaften Weiterbildung ist der Analog-/Digital-Wandler eingangsseitig mit einer ersten und mit einer zweiten Referenzspannungsquelle verbunden, die einen festgelegten Bereich um die typische Schwellspannung der ersten Halbleiterschalter begrenzen. Die erste und die zweite Referenzspannungsquelle dienen dazu, den Arbeitsbereich des Analog-/Digital-Wandlers zu fixieren, da die fertigungsbedingten Eigenschaften der ersten Halbleiterschalter Absolutwert-Schwankungen unterliegen, die hierdurch beseitigt sind. Die von der ersten und der zweiten Referenzspannungsquelle erzeugten ersten und zweiten Referenzwerte sind so gewählt, dass diese symmetrisch um die typische Schwellspannung der ersten Halbleiterschalter zu liegen kommen.

Vorteilhafterweise werden die erste und die zweite Referenzspannungsquelle als zweite MOS-Dioden ausgeführt, bei denen Kanallänge und Kanalweite wesentlich grösser als das doppelte der minimalen Strukturgrösse sind. In die zweiten MOS-Dioden wird jeweils ein Strom eingeprägt und die sich jeweils ergebende Spannung dem Analog-/Digital-Wandler als erster und zweiter Referenzwert zugeführt.

Um die Schwankungen der ersten Halbleiterschalter möglichst gross zu halten, beträgt die Kanallänge und die Kanalweite der ersten Halbleiterschalter vorteilhafterweise in etwa das Doppelte der minimalen Strukturgrösse.

Aus der Erfindung ergeben sich eine Reihe von Anwendungsmöglichkeiten, die anhand der nachfolgenden Verfahrensansprüche näher erläutert werden sollen.

Die Erfindung sieht vor, dass zur Festlegung der eindeutigen Identität eines Halbleiterchips mit Speicher- und/oder Logikeinrichtungen und einer Mehrzahl an ersten Halbleiterschaltern in jedem der ersten Halbleiterschalter ein Strom eingeprägt wird, die bei jedem der ersten Halbleiterschalter resultierende Spannung in einer vorgegebenen Reihenfolge gemessen wird und aus den Messwerten eine individuelle Ziffernfolge erzeugt wird.

Vorteilhafterweise wird die individuelle Ziffernfolge in einem Speicher des Halbleiterchips abgelegt. Hierdurch ist es möglich, die in dem Halbleiterchip gespeicherte Ziffernfolge zur Verschlüsselung von Daten zu verwenden. Wurde die individuelle Ziffernfolge aus dem Halbleiterchip ausgelesen und in einer Datenbank abgespeichert, so kann die Ziffernfolge als Kryptographie-Schlüssel verwendet werden.

Eine weitere vorteilhafte Anwendung besteht darin, die individuelle Ziffernfolge als Teil der von dem Halbleiterchip zu übertragenden Signale zu verwenden. Hierdurch wäre beispielsweise der Einsatz bei Mobilfunktelefonen denkbar. Die individuelle Ziffernfolge wird als Teil der übertragenen Signale übermittelt. Diese muss dann lediglich in der Datenbank einer bestimmten Telefongesellschaft gespeichert und freigegeben werden. Die individuelle Ziffernfolge bestimmt dann ein eindeutiges Identifikationsmerkmal des Mobiltelefons. Wird das Gerät gestohlen, kann die Ziffernfolge aus dem System der Telefongesellschaft gelöscht werden bzw. mit einem Sperrvermerk gekennzeichnet werden. Wird die Ziffernfolge zusätzlich mit anderen Telefongesellschaften ausgetauscht, kann das gestohlene Mobiltelefon nicht mehr verwendet werden.

Eine vorteilhafte Anwendung ist auch im Bereich der Kfz-Technik denkbar. Über die eindeutige Chipidentität in der Motorsteuerung bzw. in einem Bordcomputer ist eine elektronische Fahrzeugnummer verfügbar. Die Speicherung der individuellen Ziffernfolge der Motorsteuerung auf dem Bordcomputer durch den Hersteller kann sicherstellen, dass beispielsweise nur eine entsprechende Kombination von Motorsteuerung und Bordcomputer funktioniert. Das Fahrzeug wäre ansonsten fahruntüchtig. Im Falle eines Diebstahles könnte das Fahrzeug über ein im Fahrzeug installiertes Mobiltelefon geortet werden oder aber über den Bordcomputer deaktiviert werden. Weiterhin ist es denkbar, die Informationen über Defekte bzw. Wartungsvorkommnisse zusammen mit der individuellen Ziffernfolge abzuspeichern. Bei einer elektronischen Abfrage der Daten wäre für den Hersteller eine einfache Zuordnung und Qualitätsüberwachung möglich.

Eine weitere Anwendungsmöglichkeit bestünde darin, die individuelle Ziffernfolge als eindeutige, hardwareimplementierte Gerätenummer bei Computern zu verwenden. Die Ziffernfolge könnte dann beispielsweise als "IP-Adresse" bei der Datenkommunikation zur eindeutigen Identifizierung verwendet werden. Alternativ könnte die Ziffernfolge auch zur Verschlüsselung von Informationen hinterlegt werden. Durch die Registrierung der Ziffernfolge in einem Fremdrechner kann die Information dann wieder entschlüsselt werden. Hier wäre beispielsweise ein Einsatz beim Electronic-Banking denkbar.

Wird die individuelle Ziffernfolge an die Ausgangssignale des Halbleiterchips angehängt, so erhält man eine eindeutige "Autosignatur". Bei einer Signalinterpretation kann auf diese Weise die Identität geprüft und mit weiteren Kriterien verbunden werden.

Viele der oben beschriebenen Anwendungen sind auch über Softwarelösungen realisierbar. Durch die Verwendung eines Halbleiterchips mit einer individuellen Ziffernfolge (Seriennummer) werden die Manipulationsmöglichkeiten jedoch deutlich geringer.

Die Erfindung wird anhand der nachfolgenden Ausführungsbeispiele näher erläutert. Es zeigen:

Figur 1    ein erstes Ausführungsbeispiel der Erfindung,

Figur 2    ein zweites Ausführungsbeispiel der Erfindung und

Figur 3    eine Häufigkeitsverteilung der Schwellenspannung bei MOS-Transistoren.

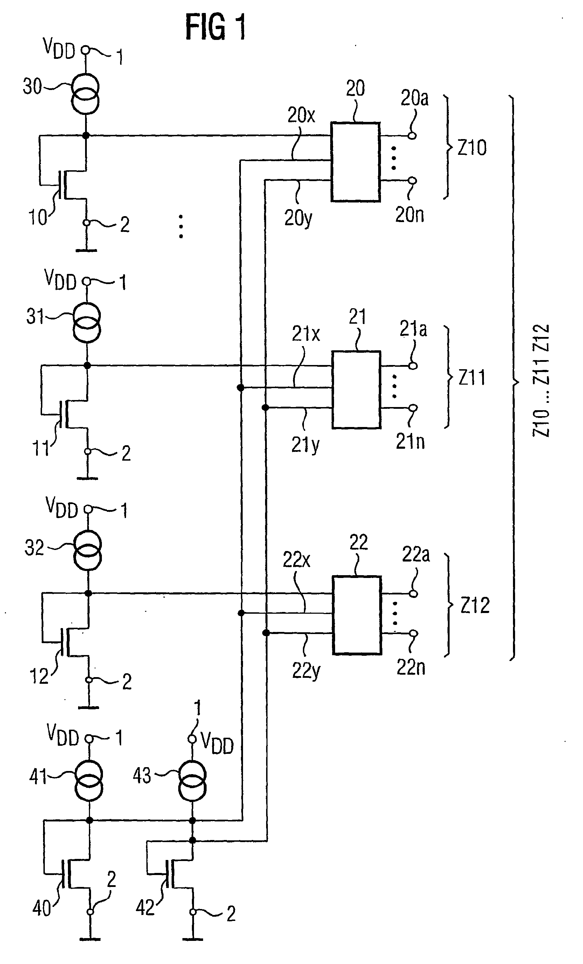

Figur 1 zeigt eine erfindungsgemässe Schaltungsanordnung, die zum Feststellen einer eindeutigen Identität eines Halbleiterchips dient. Die in der Figur 1 gezeigte Schaltungsanordnung ist auf einem Halbleiterchip zusammen mit Speicher- und/oder Logikeinrichtungen angeordnet. Da die räumliche Anordnung der Speicher- und/oder Logikeinrichtungen und der in Figur 1 gezeigten Schaltungsanordnung auf einem Halbleiterchip nicht relevant ist, beschränken sich die folgenden Erklärungen auf das Feststellen der eindeutigen Ziffernfolge mittels den in den nachfolgenden Figuren gezeigten Schaltungsanordnungen.

Die Erfindung weist eine Mehrzahl an ersten Halbleiterschaltern 10, 11, 12 auf, wobei in der Figur 1 drei Halbleiterschalter exemplarisch dargestellt sind. Die Anzahl der ersten Halbleiterschalter 10, 11, 12 richtet sich nach der Stellenanzahl der zu erzeugenden Ziffernfolge. Mit dem hier vorgestellten Ausführungsbeispiel kann eine dreistellige Ziffernfolge Z10 Z11 Z12 erzeugt werden.

Da die Verschaltung der jeweiligen Halbleiterschalter 10, 11, 12 jeweils identisch ist, wird für die weitere Erklärung lediglich auf den ersten Halbleiterschalter 10 eingegangen. Der erste Halbleiterschalter 10 ist als MOSFET ausgeführt. Sein Gateanschluss ist mit seinem Drainanschluss elektrisch verbunden. Der Verbindungspunkt zwischen dem Gate- und dem Drainanschluss ist über eine Stromquelle 30 mit einem ersten Versorgungspotentialanschluss 1 verbunden. An dem ersten Versorgungspotentialanschluss 1 liegt die Betriebsspannung $V_{DD}$ an. Sourceseitig ist der MOSFET 10 mit einem zweiten Versorgungspotentialanschluss 2 verbunden, an dem ein Bezugspotential, z.B. das Massepotential anliegt.

Der Verbindungspunkt zwischen dem Gate- und dem Drainanschluss des MOSFET 10 ist mit dem Eingang eines Analog-/Digital-Wandlers 20 verbunden. Der Analog-/Digital-Wandler 20 erzeugt ausgangsseitig in digitaler Form eine Ziffer zwischen Null und Neun. Der Analog-/Digital-Wandler 20 weist in diesem Fall vier Ausgänge 20a... 20n auf.

Der Analog-/Digital-Wandler 20 weist weiterhin einen ersten und einen zweiten Referenzeingang 20x, 20y auf. Der erste Referenzeingang 20x ist mit dem Drainanschluss eines zweiten Halbleiterschalters 40 verbunden. Der zweite Halbleiterschalter 40 ist ebenfalls als MOSFET ausgeführt und zu einer MOS-Diode verschaltet. Der Drainanschluss des MOSFET 40 ist folglich mit seinem Gateanschluss verbunden. Sourceseitig ist der MOSFET 40 mit dem zweiten Versorgungspotentialanschluss 2 verbunden. Der Verbindungspunkt zwischen dem Gate- und dem Drainanschluss des MOSFETs 40 ist über eine Stromquelle 41 mit dem ersten Versorgungspotentialanschluss 1 verbunden, an dem wiederum die positive Versorgungsspannung $V_{DD}$ anliegt.

Die Stromquelle 41 prägt einen Strom in die MOS-Diode 40 ein. Hieraus resultiert eine Spannung, die abhängig von der Schwellenspannung der MOS-Diode 40 ist, am Verbindungspunkt zwischen dem Gate- und dem Drainanschluss. Diese Referenzspannung, im Folgenden als $V_1$ bezeichnet, wird den ersten Referenzeingängen 20x, 21x, 22x aller Analog-/Digital-Wandler 20, 21, 22 zugeführt.

Zur Erzeugung der zweiten Referenzspannung $V_2$ wird ein identischer Schaltungsaufbau aus einer Stromquelle 43, einem zu einer MOS-Diode 40 verschalteten MOSFET 42 verwendet. Die Referenzspannung $V_2$ ist hierbei grösser als die Referenzspannung $V_1$.

Die MOS-Dioden 40, 42 sind dabei derart beschaffen, dass deren Kanallänge und Kanalweite wesentlich grösser als das Doppelte der minimalen Strukturgrösse ausgeführt ist. Unter der Strukturgrösse wird dabei die beherrschbare Prozesstechnologie bezeichnet, mit der der Halbleiterchip hergestellt wird. Derzeit beläuft sich die Strukturgrösse auf 0,18 $\mu$m.

Da die MOS-Dioden 40, 42 folglich als "grosse" MOS-Transistoren ausgeführt sind, unterliegen diese nur geringen statistischen Schwankungen in ihrem Verhalten. Die Schwankungen sind umso kleiner, je grösser der Transistor ist.

Im Gegensatz dazu sind die MOS-Transistoren 10, 11, 12 als "sehr kleine" Transistoren ausgeführt. Ihr Verhalten ist deshalb wesentlichen grösseren statistischen Schwankungen unterworfen. Dieser Sachverhalt beruht darauf, dass die Eigenschaften eines MOS-Transistors durch einen Dotierungsprozess beeinflusst werden, der statistischen Gesetzen unterliegt. Ein kleiner Transistor weist deshalb eine sehr kleine Anzahl an Dotierstoffatomen auf. Die Variation der elektrischen Eigenschaften des Transistors variiert dann in einem begrenzten Bereich.

Werden die "kleinen" MOS-Transistoren 10, 11, 12 mit einem Strom beaufschlagt, der jeweils identisch ist, so variiert aufgrund der technologisch bedingten unterschiedlichen Schwellenspannungen jeweils die an dem Knotenpunkt zwischen Gate- und Drainanschluss des jeweiligen MOS-Transistors anliegende Spannung. Diese Spannung wird dem Eingang des Analog-/Digital-Wandlers 20 zugeführt, der den Spannungswert in ein Verhältnis zu den Referenzspannungen $V_1$ und $V_2$ setzt und anschliessend ausgangsseitig in digitaler Form eine Ziffer Z10, Z11, Z12 ausgibt.

Die von den MOS-Transistoren 10, 11, 12 erzeugten Spannungen sind zufällig innerhalb des Bereiches zwischen dem ersten und dem zweiten Referenzwert verteilt und ändern sich während der gesamten Lebensdauer des Halbleiterchips nicht.

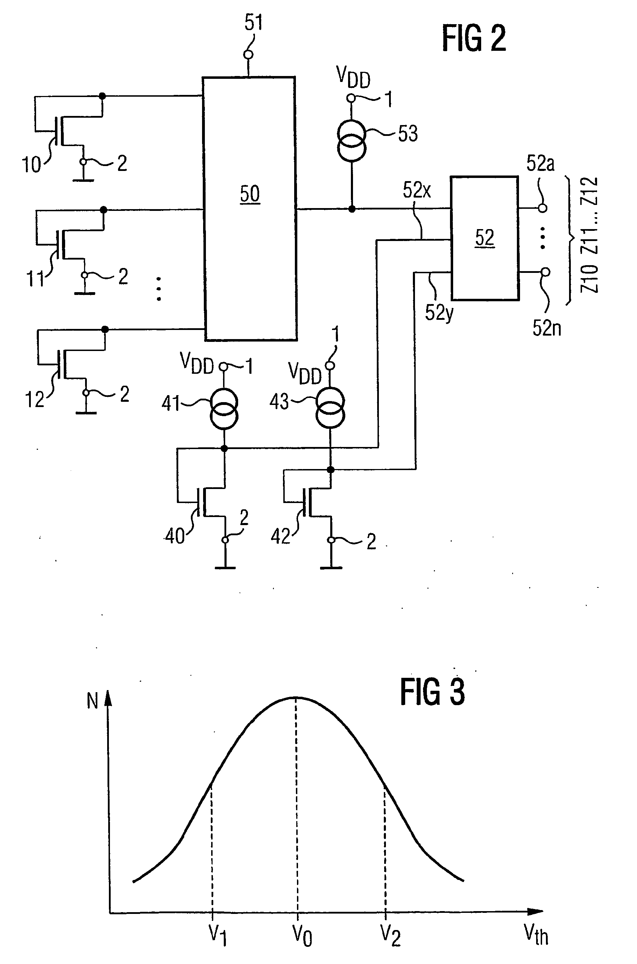

Figur 2 zeigt ein zweites, bevorzugtes Ausführungsbeispiel der Erfindung, wobei wiederum nur der Teil dargestellt ist, der zur Erzeugung der individuellen Ziffernfolge notwendig ist. Die Verbindungspunkte zwischen den Gate- und Drainanschlüssen der MOS-Transistoren 10, 11, 12 sind nunmehr mit jeweiligen Eingängen eines Multiplexers 50 verbunden. Der Multiplexer 50 weist einen Steuereingang 51 auf, über den die Auswahl getroffen wird, welcher der MOS-Transistoren 10, 11, 12 mit dem Ausgang des Multiplexers 50 verbunden wird. Ausgangsseitig ist der Multiplexer 50 einerseits mit einer Stromquelle 53 und andererseits mit dem Eingang eines Analog-/Digital-Wandlers 52 verbunden. Die Stromquelle 53 ist mit ihrem anderen Anschluss mit einem ersten Versorgungspotentialanschluss 1 verbunden, an dem die Betriebsspannung $V_{DD}$ anliegt.

Die Erzeugung der ersten und zweiten Referenzwerte zur Festlegung des Arbeitsbereichs des Analog-/Digital-Wandlers 52 erfolgt, wie in Figur 1, mittels der zu MOS-Dioden verschalteten MOS-Transistoren 40, 42, durch die jeweils mittels der Stromquellen 41, 43 ein Strom eingeprägt wird.

Der Vorteil dieses Ausführungsbeispiels besteht darin, dass nunmehr nur noch ein einziger Analog-/Digital-Wandler benötigt wird. In dem gezeigten Ausführungsbeispiel wird vorteilhafterweise auch nur eine Stromquelle 53 benötigt, um einen Strom in die "kleinen" MOS-Transistoren 10, 11, 12 einzuprägen. Selbstverständlich wäre jedoch auch denkbar, jedem der MOS-Transistoren 10, 11, 12 eine eigene Stromquelle zuzuordnen, wobei diese dann auf der Eingangsseite des Multiplexers 50 angeordnet wären.

Auf die genaue Beschreibung der Funktionsweisen des Multiplexers sowie der Analog-/Digital-Wandler wird an dieser Stelle verzichtet, da diese aus dem Stand der Technik hinlänglich bekannt sind. Die Funktionsweise eines Multiplexers kann beispielsweise dem Lehrbuch Tietze, Schenk, Halbleiterschaltungstechnik, 10. Auflage, 1993, Springer-Verlag, Seite 226 bis Seite 228 sowie zur Thematik der Analog-/Digital-Wandler auf den Seiten 774 bis 784 entnommen werden.

Anhand der Figur 3 soll das der Erfindung zugrunde liegende Prinzip zur Erzeugung einer individuellen Ziffernfolge nochmals veranschaulicht werden. Figur 3 zeigt eine Häufigkeitsverteilung der Schwellspannungen von MOS-Transistoren. Mit $V_0$ ist die typische Schwellspannung eines MOS-Transistors bezeichnet, die typischerweise 0,7 Volt beträgt. Wird ein MOS-Transistor ausreichend gross gestaltet, d.h. sind seine Kanallänge L und seine Kanalweite W wesentlich grösser als das Doppelte der minimalen Strukturgrösse, so ist die Anzahl an Dotierstoffatomen beim Herstellungsvorgang ausreichend hoch, wodurch die statistischen Schwankungen um die typische Schwellspannung $V_0$ vernachlässigbar gering sind.

Je kleiner die Kanallänge L und die Kanalweite W bei einem MOS-Transistor jedoch ausgeführt werden, desto geringer ist die Anzahl an Dotierstoffatomen, die während des Herstellungsprozesses eindiffundiert werden. Die Streuung der Schwellspannung um die typische Schwellspannung $V_0$ wird deshalb grösser. Die Streuung der Schwellspannung $V_{th}$ ist im Wesentlichen durch die Formel

$$\sigma\left(V_{th}\right) = K \cdot \frac{1}{\sqrt{A}}$$

wobei 6 die Streuung, K eine Matching-Konstante beim Herstellungsverfahren und A die Fläche des MOS-Transistors darstellt. Gemäss der oben angegebenen Formel wird die Streuung der Schwellspannung eines MOS-Transistors folglich um so grösser, je kleiner seine Fläche ist.

Um eine Gleichverteilung der durch den Herstellungsprozess unterschiedlichen Schwellspannungen zu erlangen, werden der erste Referenzspannungswert $V_1$ und der zweite Referenzspannungswert $V_2$ in einem Abstand von ca. 20 mV oberhalb und unterhalb der typischen Schwellspannung $V_0$ gewählt. Der erste und der zweite Referenzspannungswert $V_1$, $V_2$ definieren somit den Arbeitsbereich, in welchem der Analog-/Digital-Wandler eine Ziffer zwischen Null und Neun bestimmt. Die Referenzspannungswerte $V_1$ und $V_2$ können aufgrund der grossen MOS-Transistoren 40, 42 sehr präzise eingestellt werden. Da an einer MOS-Diode, unabhängig von der Höhe des durch sie fliessenden Stromes, ungefähr der Wert der Schwellenspannung anliegt, wird der Auswertung ein charakteristischer Wert zugeführt, der dann in eine Ziffer umgewandelt werden kann. Statistisch ist es folglich unwahrscheinlich, dass bei einer hohen Anzahl an ersten MOS-Transistoren identische, individuelle Ziffernfolgen entstehen.

Mit der vorliegenden Erfindung ist es folglich auf einfache Art und Weise möglich, einen Halbleiterchip mit einer individuellen Ziffernfolge zu versehen, wobei diese aufgrund verfahrenstechnischer Toleranzen bei der Herstellung gewonnen wird und deshalb nicht manipulierbar, nicht kopierbar sowie mit einer hohen Wahrscheinlichkeit eindeutig ist.

**Patentansprüche**

1.  Halbleiterchip, der Speicher- und/oder Logikeinrichtungen aufweist und eine Mehrzahl an ersten kleinen Feldeffekt-Halbleiterschaltern (10, 11, 12), von denen jeder eine individuelle zufallsbedingte Eigenschaft besitzt, wobei diese Eigenschaften in ihrer Summe den Halbleiterchip eindeutig charakterisieren und eine Variation der Eigenschaften aller ersten Halbleiterschalter (10, 11, 12) umso größer ist, je kleiner die ersten Halbleiterschalter (10, 11, 12) sind, sowie eine Auswertungsschaltung (20, 21, 22; 50, 52), die mit den ersten Halbleiterschaltern (10, 11, 12) verbunden ist und einen Vergleich mittels großen zweiten Halbleiterschaltern bezüglich der individuellen zufallsbedingten Eigenschaften vornimmt, so dass aus den individuellen zufallsbedingten Eigenschaften der ersten Halbleiterschalter eine den Halbleiterchip charakterisierende Ziffernfolge (Z10, Z11, Z12) ableitbar und auslesbar ist, umfasst.

2. Halbleiterchip nach Anspruch 1,
**dadurch gekennzeichnet, daß**
die Eigenschaften der ersten Halbleiterschalter (10, 11, 12) ausgewertet werden, die aufgrund verfahrenstechnischer Toleranzen bei der Herstellung variieren.

3. Halbleiterchip nach Anspruch 1 oder 2,
**dadurch gekennzeichnet, daß**
die ersten Halbleiterschalter (10, 11, 12) nicht für die Funktion der Speicher- und/oder Logikeinrichtungen notwendig sind.

4. Halbleiterchip nach einem der Ansprüche 1 bis 3,
**dadurch gekennzeichnet, daß**
eine erste und eine zweite Referenzspannungsquelle vorgesehen sind, die mit der Auswertungsschaltung (20, 21, 22; 50, 52) verbunden sind, um deren Arbeitsbereich zu fixieren.

5. Halbleiterchip nach Anspruch 4,
**dadurch gekennzeichnet, daß**
die erste und die zweite Referenzspannungsquelle jeweils einen zweiten Halbleiterschalter (40, 42) umfassen, deren Kanallänge (L) und Kanalweite (W) wesentlich größer sind als die der ersten Halbleiterschalter (10, 11, 12).

6. Halbleiterchip nach einem der Ansprüche 1 bis 5,
**dadurch gekennzeichnet, daß**
die ersten Halbleiterschalter (10, 11, 12) als MOSFETs ausgeführt sind, die zu ersten MOS-Dioden verschaltet sind.

7. Halbleiterchip nach Anspruch 6,
**dadurch gekennzeichnet, daß**
die ersten MOS-Dioden jeweils mit einem vorgegebenen Strom beaufschlagt werden und die sich jeweils ergebende Spannung als den Halbleiterschalter kennzeichnendes Merkmal der Auswertungsschaltung (20, 21, 22; 50, 52) zugeführt wird.

8. Halbleiterchip nach Anspruch 7,
**dadurch gekennzeichnet, daß**
die Auswertungsschaltung eine der Anzahl der ersten Halbleiterschalter (10, 11, 12) entsprechende Anzahl an Analog-/Digital-Wandlern (20, 21, 22) aufweist, wobei durch das Auslesen der Ausgänge (20a...20n, 21a...21n, 22a...22n) der Analog-/Digital-Wandler (20, 21, 22) in einer vorgegebenen Reihenfolge eine den Halbleiterchip charakterisierende Ziffernfolge (Z10, Z11, Z12) entsteht.

9. Halbleiterchip nach Anspruch 7,
**dadurch gekennzeichnet, daß**

die Auswertungsschaltung einen Multiplexer (50) aufweist, dessen Eingänge mit jeweils einem der ersten Halbleiterschalter (10, 11, 12) verbunden sind und dessen Ausgang mit einem Analog-/Digital-Wandler (52) verbunden ist, an dem ausgangsseitig eine den Halbleiterchip charakterisierende Ziffernkombination (Z10, Z11, Z12) auslesbar ist.

10. Halbleiterchip nach einem der Ansprüche 7 bis 9,
**dadurch gekennzeichnet, daß**
der Analog-/Digital-Wandler (52) eingangsseitig mit der ersten und der zweiten Referenzspannungsquelle (40...43) verbunden ist, die einen festgelegten Bereich um die typische Schwellspannung ($V_0$) der ersten Halbleiterschalter (10, 11, 12) begrenzen.

11. Halbleiterchip nach Anspruch 10,
**dadurch gekennzeichnet, daß**
die erste und die zweite Referenzspannungsquelle als zweite MOS-Dioden ausgeführt sind, bei denen Kanallänge (L) und Kanalweite (W) wesentlich grösser als das Doppelte der minimalen Strukturgrösse sind und in die jeweils ein Strom eingeprägt wird und die sich jeweils ergebende Spannung dem Analog-/Digital-Wandler als erster und zweiter Referenzwert ($V_1$, $V_2$) zugeführt wird.

12. Halbleiterchip nach einem der Ansprüche 1 bis 11,
**dadurch gekennzeichnet, daß**
die Kanallänge (L) und die Kanalweite (W) der ersten Halbleiterschalter (10, 11, 12) in etwa das Doppelte der minimalen Strukturgrösse beträgt.

13. Verfahren zur Festlegung der eindeutigen Identität eines Halbleiterchips mit Speicher- und/oder Logikeinrichtungen und einer Mehrzahl an ersten kleinen Feldeffekt-Halbleiterschaltern (10, 11, 12)
**dadurch gekennzeichnet, daß**

    - in jeden der ersten Halbleiterschalter (10, 11, 12) ein Strom eingeprägt wird,
    - die bei jedem der ersten Halbleiterschalter (10, 11, 12) resultierende Spannung in einer vorgegebe-nen Reihenfolge gemessen wird, wobei eine Variation der Spannungen umso größer ist, je kleiner die ersten Halbleiterschalter (10, 11, 12) sind,
    - die resultierende Spannung in ein Verhältnis zu einer ersten und zweiten Referenzspannung gesetzt wird und daraus eine individuelle ziffernfolge (Z10, Z11, Z12) erzeugt wird.

14. Verfahren nach Anspruch 13,
**dadurch gekennzeichnet, daß**
die individuelle Ziffernfolge in dem Speicher des Halbleiterchips abgelegt wird.

15. Verfahren nach einem der Ansprüche 13 oder 14,

**dadurch gekennzeichnet, daß**
die individuelle Ziffernfolge aus dem Halbleiterchip ausgelesen und in einer Datenbank abgespeichert wird.

16. Verfahren nach einem der Ansprüche 13 bis 15,
**dadurch gekennzeichnet, daß**
die individuelle Ziffernfolge zur Verschlüsselung oder Codierung von aus dem Halbleiterchip auszulesenden Daten verwendet wird.

17. Verfahren nach einem der Ansprüche 13 bis 16,
**dadurch gekennzeichnet, daß**
die individuelle Ziffernfolge als Teil der von dem Halbleiterchip zu übertragenden Signale verwendet wird.

**Claims**

1. Semiconductor chip having memory and/or logic devices and comprising a plurality of first small field effect semiconductor switches (10, 11, 12), each of which has an individual randomly induced property, the sum of these properties unequivocally characterizing the semiconductor chip and a variation in the properties of all first semiconductor switches (10, 11, 12) being greater the smaller the first semiconductor switches (10, 11, 12), and an evaluation circuit (20, 21, 22; 50, 52) which is connected to the first semiconductor switches (10, 11, 12) and uses large second semiconductor switches to compare the individual randomly induced properties, so that a digit sequence (Z10, Z11, Z12) which characterizes the semiconductor chip can be derived from the individual randomly induced properties of the first semiconductor switches and can be read out.

2. Semiconductor chip according to Claim 1,
**characterized in that**
those properties of the first semiconductor switches (10, 11, 12) which vary on account of process engineering tolerances during manufacture are evaluated.

3. Semiconductor chip according to Claim 1 or 2,
**characterized in that**
the first semiconductor switches (10, 11, 12) are not required for the operation of the memory and/or logic devices.

4. Semiconductor chip according to one of Claims 1 to 3,
**characterized in that**
provision is made of a first and a second reference voltage source which are connected to the evaluation circuit (20, 21, 22; 50, 52) in order to fix the operating range of the latter.

5. Semiconductor chip according to Claim 4,
**characterized in that**
the first and second reference voltage sources each comprise a second semiconductor switch (40, 42) whose channel length (L) and channel width (W) are considerably larger than those of the first semiconductor switches (10, 11, 12).

6. Semiconductor chip according to one of Claims 1 to 5,
**characterized in that**
the first semiconductor switches (10, 11, 12) are in the form of MOSFETs which are connected to form first MOS diodes.

7. Semiconductor chip according to Claim 6,
**characterized in that**
a prescribed current is applied to each of the first MOS diodes and the respective resultant voltage is supplied, as the feature that characterizes the semiconductor switch, to the evaluation circuit (20, 21, 22; 50, 52).

8. Semiconductor chip according to Claim 7,
**characterized in that**
the evaluation circuit has a number of analogue/digital converters (20, 21, 22) which corresponds to the number of first semiconductor switches (10, 11, 12), a digit sequence (Z10, Z11, Z12) which characterizes the semiconductor chip being produced by reading the outputs (20a...20n, 21a...21n, 22a...22n) of the analogue/digital converters (20, 21, 22) in a prescribed order.

9. Semiconductor chip according to Claim 7,
**characterized in that**
the evaluation circuit has a multiplexer (50) whose inputs are connected to a respective one of the first semiconductor switches (10, 11, 12) and whose output is connected to an analogue/digital converter (52), at the output of which a digit combination (Z10, Z11, Z12) which characterizes the semiconductor chip can be read out.

10. Semiconductor chip according to one of Claims 7 to 9,
**characterized in that**
the input of the analogue/digital converter (52) is connected to the first and second reference voltage sources (40...43) which limit a defined range around the typical threshold voltage ($V_0$) of the first semiconductor switches (10, 11, 12).

11. Semiconductor chip according to Claim 10,
**characterized in that**
the first and second reference voltage sources are in the form of second MOS diodes in which the channel length (L) and channel width (W) are considerably larger than twice the minimum feature size and into which a respective current is injected and the respective resultant voltage is supplied to the analogue/digital converter as a first and a second reference value ($V_1$, $V_2$).

12. Semiconductor chip according to one of Claims 1 to 11,
    **characterized in that**
    the channel length (L) and the channel width (W) of the first semiconductor switches (10, 11, 12) are approximately twice the minimum feature size.

13. Method for establishing the unequivocal identity of a semiconductor chip having memory and/or logic devices and a plurality of first small field effect semiconductor switches (10, 11, 12),
    **characterized in that**

    - a current is injected into each of the first semiconductor switches (10, 11, 12),
    - the resultant voltage in each of the first semiconductor switches (10, 11, 12) is measured in a prescribed order, a variation in the voltages being greater the smaller the first semiconductor switches (10, 11, 12),
    - the resultant voltage being related to a first and a second reference voltage and an individual digit sequence (Z10, Z11, Z12) being generated from the latter.

14. Method according to Claim 13,
    **characterized in that**
    the individual digit sequence is stored in the memory of the semiconductor chip.

15. Method according to either of Claims 13 and 14,
    **characterized in that**
    the individual digit sequence is read from the semiconductor chip and stored in a database.

16. Method according to one of Claims 13 to 15,
    **characterized in that**
    the individual digit sequence is used to encrypt or code data which are to be read from the semiconductor chip.

17. Method according to one of Claims 13 to 16,
    **characterized in that**
    the individual digit sequence is used as part of the signals which are to be transmitted from the semiconductor chip.

## Revendications

1. Puce à semi-conducteur qui comporte des dispositifs de mémorisation et/ou de logique et une pluralité de premiers petits commutateurs à semi-conducteur à effet de champ (10, 11, 12) qui ont chacun une propriété aléatoire propre, ces propriétés caractérisant de façon univoque dans leur ensemble la puce à semi-conducteur et une variation des propriétés de tous les premiers commutateurs à semi-conducteur (10, 11, 12) étant d'autant plus grande que les premiers commutateurs à semi-conducteur (10, 11, 12) sont petits, ainsi qu'un circuit d'exploitation (20, 22 ; 50, 52), qui est relié aux premiers commutateurs à semi-conducteur (10, 11, 12) et qui effectue une comparaison des propriétés aléatoires propres au moyen de deuxièmes grands commutateurs à semi-conducteur de sorte que l'on peut déduire, des propriétés aléatoires propres des premiers commutateurs à semi-conducteur, une suite de chiffres (Z10, Z11, Z12) caractérisant la puce à semi-conducteur et la lire.

2. Puce à semi-conducteur selon la revendication 1, **caractérisée en ce que** l'on exploite les propriétés des premiers commutateurs à semi-conducteur (10, 11, 12) qui varient lors de la fabrication en raison des tolérances techniques du procédé.

3. Puce à semi-conducteur selon la revendication 1 ou 2, **caractérisée en ce que** les premiers commutateurs à semi-conducteur (10, 11, 12) ne sont pas nécessaires à la fonction des dispositifs de mémorisation et/ou de logique.

4. Puce à semi-conducteur selon l'une des revendications 1 à 3, **caractérisée en ce qu'**il est prévu une première et une deuxième sources de tension de référence, qui sont reliées au circuit d'exploitation (20, 22 ; 50, 52) pour fixer leur domaine de travail.

5. Puce à semi-conducteur selon la revendication 4, **caractérisée en ce que** la première et la deuxième sources de tension de référence comportent chacune un deuxième commutateur à semi-conducteur (40, 42), dont la longueur de canal (L) et la largeur de canal (W) sont sensiblement plus grandes que celles des premiers commutateurs à semi-conducteur (10, 11, 12).

6. Puce à semi-conducteur selon l'une des revendications 1 à 5, **caractérisée en ce que** les premiers commutateurs à semi-conducteur (10, 11, 12) sont réalisés sous la forme de MOSFET qui sont câblés à des premières diodes MOS.

7. Puce à semi-conducteur selon la revendication 6, **caractérisée en ce que** les premières diodes MOS sont chacune alimentées en un courant prescrit et la tension, qui s'ensuit respectivement, est appliquée au circuit d'exploitation (20, 21, 22 ; 50, 52) en tant que caractéristique caractérisante du commutateur à semi-conducteur.

**8.** Puce à semi-conducteur selon la revendication 7, **caractérisée en ce que** le circuit d'exploitation comporte un nombre de convertisseurs analogiques/numériques (20, 21, 22) qui correspond au nombre de premiers commutateurs à semi-conducteur (10, 11, 12), une suite de chiffres (Z10, Z11, Z12), caractérisant la puce à semi-conducteur, étant obtenue en lisant les sorties (20a ...20n, 21a ... 21n, 22a ... 22n) des circuits analogiques/numériques (20, 21, 22) dans un ordre prescrit.

**9.** Puce à semi-conducteur selon la revendication 7, **caractérisée en ce que** le circuit d'exploitation comporte un multiplexeur (50) dont les entrées sont reliées chacune à l'un des premiers commutateurs à semi-conducteur (10, 11, 12) et dont la sortie est reliée à un convertisseur analogique/numérique (52), sur lequel on peut lire une combinaison de chiffres (Z10, Z11, Z12) caractérisant la puce à semi-conducteur.

**10.** Puce à semi-conducteur selon l'une des revendications 7 à 9, **caractérisée en ce que** le convertisseur analogique/numérique (52) est relié du côté de l'entrée à la première et à la deuxième sources de tension de référence (40 ... 43), qui limitent un domaine déterminé autour de la tension de seuil typique ($V_0$) des premiers commutateurs à semi-conducteur (10, 11, 12).

**11.** Puce à semi-conducteur selon la revendication 10, **caractérisée en ce que** la première et la deuxième sources de tension de référence sont réalisées sous la forme de deuxièmes diodes MOS, dont la longueur de canal (L) et la largeur de canal (W) sont sensiblement supérieures au double de la taille minimale des structures et dans lesquelles un courant est injecté respectivement et la tension, qui s'ensuit respectivement, est appliquée au convertisseur analogique/numérique en tant que première et deuxième valeurs de référence ($V_1$, $V_2$).

**12.** Puce à semi-conducteur selon l'une des revendications 1 à 11, **caractérisée en ce que** la longueur de canal (L) et la largeur de canal (W) des premiers commutateurs à semi-conducteur (10, 11,12) est à peu près égal au double de la taille minimale des structures.

**13.** Procédé de détermination de l'identité univoque d'une puce à semi-conducteur comportant des dispositifs de mémorisation et/ou de logique et une pluralité de premiers petits commutateurs à semi-conducteur à effet de champ (10, 11, 12), **caractérisé en ce que**

- un courant est injecté dans chacun des premiers commutateurs à semi-conducteur (10, 11, 12),
- la tension résultante au niveau de chacun des premiers commutateurs à semi-conducteur (10, 11, 12) est mesurée dans un ordre prescrit, une variation des tensions étant d'autant plus grande que les premiers commutateurs à semi-conducteur (10, 11, 12) sont petits,
- la tension résultante est dans un rapport avec la première et la deuxième tensions de référence et une suite de chiffres propre (Z10, 11, Z12) est produite à partir de la tension résultante.

**14.** Procédé selon la revendication 13, **caractérisé en ce que** la suite de chiffres propre est mémorisée dans la mémoire de la puce à semi-conducteur.

**15.** Procédé selon l'une des revendications 13 ou 14, **caractérisé en ce que** la suite de chiffres propre est lue dans la puce à semi-conducteur et est mémorisée dans une banque de données.

**16.** Procédé selon l'une des revendications 13 à 15, **caractérisé en ce que** la suite de chiffres propre est utilisée pour chiffrer ou coder des données qui doivent être lues dans la puce à semi-conducteur.

**17.** Procédé selon l'une des revendications 13 à 16, **caractérisé en ce que** la suite de chiffres propre est utilisée comme partie des signaux à transmettre par la puce à semi-conducteur.

# FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0313967 A1
- WO 9711442 A
- FR 2471083 A

**In der Beschreibung aufgeführte Nicht-Patentliteratur**

- Halbleiterschaltungstechnik. **TIETZE ; SCHENK.** Thematik der Analog-/Digital-Wandler. Springer-Verlag, 1993, vol. 10, 226-228774-784